# EUROPEAN PATENT APPLICATION

(11) **EP 2 378 468 A1**
(43) Date of publication of application: **19.10.2011**
(21) Application number: 09175550.4
(22) Date of filing: 10.11.2009
(51) Int. Cl.: G06Q 10/00, G06Q 50/00

(54) **Platform for aircraft maintenance services and asset management**

(71) Applicant: Airbus Operations GmbH, 21129 Hamburg (DE); Airbus SAS, 31707 Blagnac Cedex (FR)
(72) Inventor: Marwedel, Stephan, 22607 Hamburg (DE); Poupard, Matthieu, 31530 Thil (FR); Reitmann, Jörg, 21698 Harsefeld (DE)
(74) Representative: Charles, Glyndwr

(57) **Abstract**

The invention relates to an integrated end-to-end maintenance platform (1) for maintenance of an aircraft (8) comprising a customer interface for selecting a customized service package including modular services of different aircraft maintenance service suppliers by means of a customer terminal (5) having access to said maintenance platform (1) via a communication network (4).

## Description

The invention relates to an integrated end-to-end maintenance platform, a method for providing maintenance services and asset-management for an aircraft or an aircraft fleet and a tool for developing modular maintenance services for such an integrated end-to-end maintenance platform.

Maintenance of an aircraft is crucial for the safety and reliability of airlines operations. For maintenance of the aircraft fleet an aircraft operator needs to manage multiple maintenance service suppliers and spare part suppliers in a very efficient and coordinated manner. Spare part suppliers can get these spare parts from original equipment manufacturers (OEM) or part manufacture's approval suppliers (PMA). Maintenance, repair and overhaul (MRO) organizations perform maintenance and repair activities to guarantee a reliable operation of the aircraft. Aircraft operators which are typically customers of maintenance services often provide also maintenance services to other aircraft operators.

Conventional centralized computerized maintenance management systems (CMMS) such as the centralized management and maintenance system proposed by Boeing in WO 2007/059314 A2 provide an integrated full package maintenance service from one maintenance service provider. Such a conventional centralized maintenance system has the drawback for a customer such as an aircraft operator that there is no choice between different service suppliers offering specific maintenance services. Accordingly with this conventional centralized maintenance system a customer has only the option to get a standard maintenance service package from one maintenance service provider (MSP). Consequently this conventional centralized maintenance system is very inflexible. Moreover customers such as aircraft operators which offer maintenance services themselves have no possibility to supplement their own maintenance services with other necessary maintenance services of other service suppliers. Furthermore, customers such as aircraft operators have in this conventional centralized system no opportunity to select a specific service supplier for a specific maintenance service. Consequently the quality of the maintenance services received by the customer suffers leading to a diminished availability of the respective aircraft.

Accordingly, it is an object of the present invention to provide a maintenance platform for an aircraft fleet which is flexible and provides efficiently maintenance services to customers operating an aircraft fleet.

This object is achieved by an integrated end-to-end maintenance platform comprising the features of claim 1.

The present invention provides an integrated end-to-end maintenance platform for maintenance of an aircraft comprising a customer interface for selecting a customized service package including modular maintenance services of different aircraft maintenance service suppliers by means of a customer terminal of a customer having access to said maintenance platform via a communication network.

The integrated end-to-end maintenance and asset management platform according to the present invention offers a full range of aircraft maintenance services and products in a collaborative way. The maintenance platform is flexible, scalable and adaptable to the needs of customers and suppliers.

The provider of the integrated end-to-end maintenance platform supplies a tool that enables a seamless development of maintenance service that provides a seamless interaction between the actors such as the aircraft operators, the original equipment manufacturers (OEM) and the maintenance, repair and overhaul (MRO) organizations. With the integrated end-to-end maintenance platform according to the present invention the customer is able to compose and customise its individual service package.

In an embodiment of the maintenance platform according to the present invention the maintenance platform is implemented on at least one platform server connected to the communication network.

In a possible embodiment the communication network is formed by a plurality of interconnected networks such as the Internet. In an alternative embodiment the communication network is formed by a separate local area network (LAN) or wide area network (WAN) such as corporate networks.

In an embodiment of the integrated end-to-end maintenance platform according to the present invention the platform server is connected to at least one database storing selectable service modules provided by service suppliers. This modular maintenance service database can hold information data about maintenance services of different service suppliers which can be registered with the at least one maintenance platform server. The service modules can be selected in response to a query of the customer.

The maintenance platform server can be connected to further databases such as aircraft configuration databases, aircraft status databases or simulation model databases.

The modular services provided by the different service suppliers can comprise different kinds of services.

In a possible embodiment the modular services comprise maintenance information services. These maintenance information services are for example providing access to aircraft fleet information databases such as the actual configuration of the aircraft fleet or to technical documentation databases of service suppliers.

The modular services can also comprise information and decision support services, in particular diagnostic services, prognostic services and predictive maintenance planning services.

Furthermore, the modular service can comprise aircraft maintenance execution services as well as remote maintenance services.

In a preferred embodiment the maintenance platform server performs a consistency check of the different selected service modules to guarantee the required quality of service.

In a further embodiment of the integrated end-to-end maintenance platform according to the present invention the quality of the provided services is monitored by the maintenance platform server on the basis of feedback data received from the customer terminals via said communication network.

In a possible embodiment of the integrated end-to-end maintenance platform the customer terminals are customer terminals of aircraft operators, maintenance, repair and overhaul organisations (MRO) or aircraft lessors.

In an embodiment of the integrated end-to-end maintenance platform said service suppliers comprise original equipment manufacturers (OEM), maintenance, repair and overhaul organisations (MRO) as well as Information System (IS) suppliers.

In a possible embodiment of the integrated end-to-end maintenance platform the platform comprises a common platform interface such as plug and play port for each interactive service supplier module. This platform interface can be a SOAP interface, a JEE, a JMS, a CORBA or a _{•}NET-interface_{•}

In a possible embodiment of the integrated end-to-end maintenance platform the maintenance platform server is connected by means of a wireless link to a condition, health and usage monitoring and recording system of an aircraft.

In a possible embodiment of the integrated end-to-end maintenance platform according to the present invention the condition monitoring and recording system of the aircraft provides flight parameter data, usage data, health data and configuration data of said aircraft to the at least one maintenance platform server.

In a possible embodiment of the integrated end-to-end maintenance platform according to the present invention maintenance messages are provided by the monitoring and recording system of the aircraft in real time to the maintenance platform server.

In the following embodiments of the integrated end-to-end maintenance platform are described with reference to the enclosed figures.
- Fig. 1: shows a block diagram for a possible embodiment of an integrated end-to-end maintenance platform ac- cording to the present invention;
- Fig. 2: shows a signal diagram illustrating the operation of the integrated end-to-end maintenance platform according to the present invention;
- Fig. 3: illustrates a possible embodiment of an integrated end-to-end maintenance platform according to the present invention;
- Fig. 4: shows a diagram illustrating the operation of an integrated end-to-end maintenance platform accord- ing to the present invention.
- Fig. 5: shows a diagram for illustrating an integration of services modules in the maintenance platform ac- cording to the present invention.

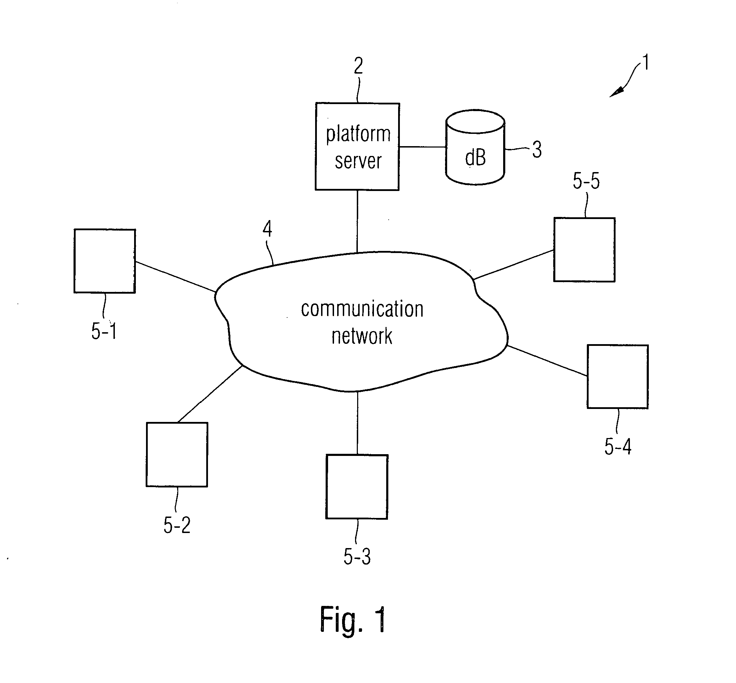

As can be seen from Fig. 1 the integrated end-to-end maintenance platform 1 according to the present invention comprises at least one maintenance platform server 2 having access to at least one database 3. The maintenance platform server 2 is connected to a communication network 4 such as the Internet. The maintenance platform can comprise several distributed platform servers 2 as well. The communication network 4 is connected with a plurality of customer terminals 5-1, 5-2, 5-3, 5-4, 5-5. These customer terminals 5-i can belong to different kind of customers in particular aircraft operators, maintenance repair and overhaul organisations (MRO) or aircraft lessors. The customer terminal can be linked to the communication network 4 via wireless or wired links. In a possible embodiment a customer terminal such as the customer terminal 5-5 can be located within the cockpit of the aircraft to be maintained. In this embodiment a crew member of the aircraft such as the pilot can send a request or a query for a maintenance service if necessary. If for example the pilot detects an anomaly before dispatch of the aircraft he can send a service request via a wireless link from the terminal 5-5 to the platform server 2.

In a possible embodiment the service suppliers offering a modular service can send instructions for performing the selected modular service at the respective aircraft to mobile terminals or devices of mobile workers of service supply crews. For example the present platform server 2 after selection of the respective modular service can send instructions to a mobile device or terminal integrated in a maintenance truck or a fuel supply truck. If for example the selected modular service includes supplying the aircraft with fuel a terminal 5-1 of a fuel supply truck belonging to a fuel service supplier at the respective airport can receive an instruction to drive to a specific aircraft and fill the fuel tank of that aircraft. In a possible embodiment the mobile workers of the service supplier can receive aircraft status information data along with the service instruction such as the current position of the aircraft at the airport, the tank volume, or a time limit via the wireless link on a mobile device such as a laptop or a PDA on a secure communication channel, e. g. via a VPN channel.

Some customers can be both provider of maintenance services and recipients of maintenance services. The end-to-end maintenance platform 1 implemented on the maintenance platform server 2 provides a customer interface for each customer to select a customized service package including modular services of different aircraft maintenance service suppliers by means of the respective customer terminal. The service suppliers comprise in particular original equipment manufacturers (OEM), maintenance, repair and overhaul organisations (MRO) and Information System (IS) suppliers. The maintenance platform server 2 is connected to the database 3 which stores selectable service modules provided by service suppliers. The maintenance platform 1 can comprise a standard platform interface for interactive service modules. The standard platform interface can have in a possible embodiment plug and play ports. In an embodiment the platform interface is formed by a SOAP interface. In an alternative embodiment the platform interface is formed by an AMQP-interface (Advanced Message Queuing Protocol). This AMQP-interface using a binary protocol allows for a high payload for a given bandwidth. In further alternative embodiments the platform interface is implemented as a JEE, JMS, CORBA or •NET interface•

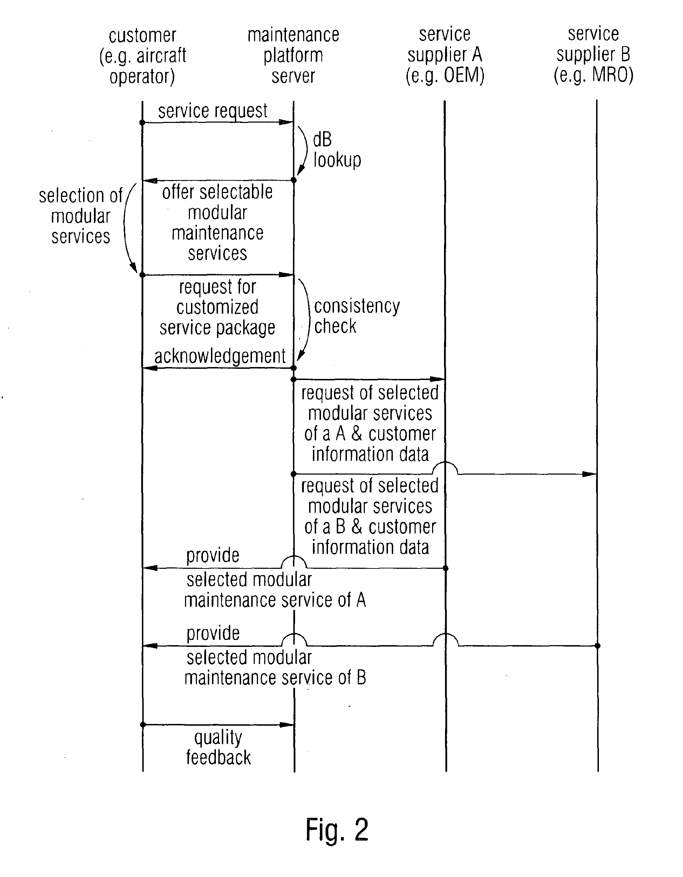

Fig. 2 shows a signal diagram to illustrate the operation of a possible embodiment of the integrated end-to-end maintenance platform 1 according to the present invention. In the given example a customer such as an aircraft operator sends a service request or service query for a maintenance service from its terminal 5 via the communication network 4 to the maintenance platform server 2 shown in Fig. 1. The maintenance platform server 2 performs a database lookup in its database 3 and indicates maintenance service modules stored in its database 3 to the customer terminal 5 of the respective customer. At the terminal 5-i, of the requesting customer a selection of the modular services offered by the maintenance platform server 2 is performed. The selection can be performed manually by an operator of the customer or automatically depending on the requested maintenance service or query of the customer. After selection of the modular services the terminal 5-i of the customer sends a request for a customized service package comprising different selected maintenance service modules to the maintenance platform server 2. In a preferred embodiment the platform server 2 performs a consistency check of the selected modular services. The consistency check can e. g. be performed by means of rules which can be public rules provided by the maintenance platform provider to the maintenance service suppliers along with a software development kit or tool. If the consistency check is successful the maintenance platform server 2 sends an acknowledgement to the customer terminal 5-i. Furthermore, the maintenance platform server 2 sends in the given example a request for selected modular services to a service supplier A and a request for selected modular services to another service supplier B. The service supplier A can be for example an original equipment manufacturer (OEM) providing necessary spare parts for the requested modular services. The service supplier B can for instance be a maintenance repair and overhaul organisation MRO performing the necessary maintenance services. In a possible embodiment the request for selected service modules can also comprise customer information data indicating the respective customer and possibly the type and configuration of the aircraft to be maintained. The service supplier A provides a first group of selected modular maintenance services requested by the customer and the service supplier B provides a second group of selected modular maintenance services requested by the customer. After performance of the modular maintenance services of the different service suppliers A, B the customer can give in a possible embodiment a quality feedback to the maintenance platform server 2 which might be forwarded to the respective service suppliers A, B. Accordingly, a quality of the provided services is monitored by the platform server 2 on the basis of feedback data received from the customer terminals via the communication network 4.

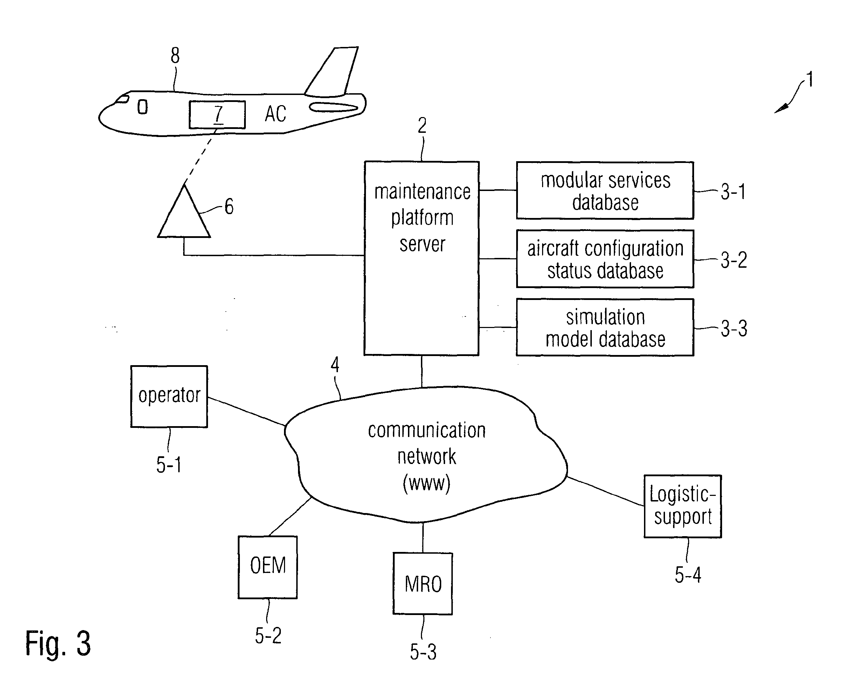

Fig. 3 shows a possible embodiment of the integrated end-to-end maintenance platform 1 according to the present invention. In the shown embodiment different actors such as an aircraft operator, an original equipment manufacturer (OEM) and a maintenance, repair and overhaul organization (MRO) and a logistic support provider are connected via a communication network 4 to the maintenance platform server 2. In the given embodiment the maintenance platform server 2 has access to different databases 3-1, 3-2, 3-3 comprising a modular service database 3-1, an aircraft configuration and status database 3-2 and a simulation model database 3-3. The maintenance platform server 2 is connected to a base station 6 having a wireless link to data monitoring and recording system 7 of an aircraft 8. In a possible embodiment the data monitoring and recording system 7 of the aircraft 8 provides flight parameter data, usage data and configuration data of the aircraft 8 via the wireless link and the base station 6 to the maintenance platform server 2. In a possible embodiment maintenance messages are provided by said monitoring and recording system 7 of said aircraft 8 in real time to the maintenance platform server 2. In this embodiment it is possible that a maintenance message received from the aircraft 8 is forwarded by the maintenance platform server 2 via the communication network 4 to an operator of the respective aircraft 8. After having received the maintenance message which might include parameter data, usage data and configuration data of the respective aircraft 8 the aircraft operator can send a maintenance service request via the communication network 4 to the maintenance platform server 2 even before the aircraft 8 reaches an airport where maintenance service suppliers are located. The maintenance platform server 2 can arrange a maintenance service according to the customized service package selected by the aircraft operator comprising maintenance services of different service suppliers. A selection criterion can be the location of the respective service supplier. The maintenance platform server 2 might offer selectable modular maintenance services from service suppliers located at a destination airport of the respective aircraft 8 which needs maintenance. In a possible embodiment the maintenance platform server 2 provides information and decision support services for the customer in particular diagnostic services, prognostic services and predictive maintenance planning services. The maintenance platform server 2 can have access to a simulation model database 3-3 simulating future maintenance needs of the respective aircraft 8. This allows a preventive maintenance of components within the aircraft 8. The preventive maintenance allows the systematic detection and correction of faults either before they occur or before they develop into major defects of the aircraft components. This includes tests, measurements, adjustments and part replacements to prevent faults from occuring.

In a possible embodiment the modular services provided by the maintenance platform server 2 include remote maintenance services. These remote maintenance services can also include remote maintenance services of software or hardware components within the aircraft 8 before landing at an airport via the wireless data link. For example if a software error during execution of software component within the aircraft 8 is detected the maintenance platform server 2 can be notified via the wireless link and the base station 6. The aircraft operator of the respective aircraft 8 being informed about the detected error can send a maintenance service request to the maintenance platform server 2. After selection of the specific service modules the maintenance service supplier offering the specific maintenance service for repairing the detected software error can perform a remote diagnosis of the occurred software problem and repair the software component of the aircraft 8 by sending the necessary repair instructions via the wireless link or prepare a software update at the destination airport. Another possibility is to upload a software component to replace the detected faulty software component within the aircraft 8 either during its flight or in a safety sensible application on ground.

In a possible embodiment of the integrated end-to-end maintenance platform 1 according to the present invention the maintenance platform 1 offers an inventory control, i.e. a management of spare parts, tools and other materials necessary for the offered maintenance services. The maintenance platform server 2 can also provide information routing between the different customers connected to the communication network 4 via customer terminals 5-i. The maintenance platform server 2 can guarantee an overall quality of service, consistency and interoperability of the maintenance services offered through the maintenance platform 1. The different maintenance services are fully modular and interoperable. In the system according to the present invention, the customers are able to fully customise their service packages including the choice of the respective service suppliers.

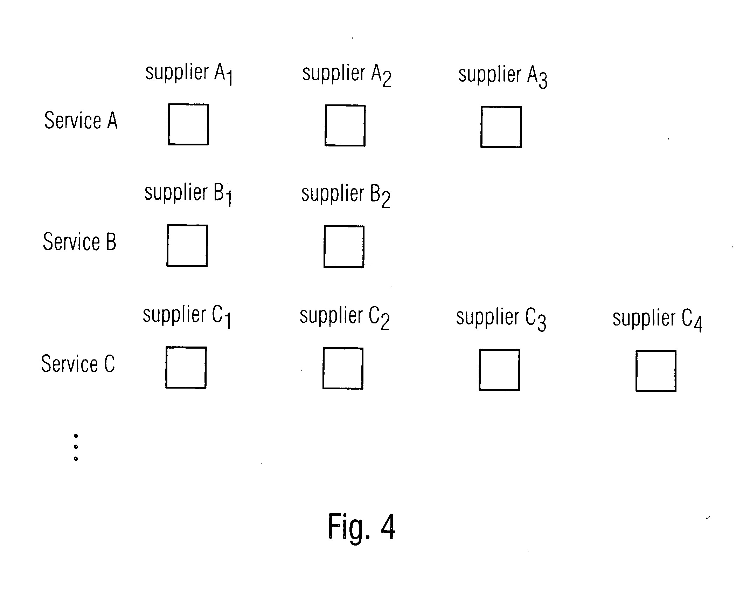

Fig. 4 shows a simple diagram for illustrating the operation of the integrated end-to-end maintenance platform 1 according to the present invention. In a possible embodiment a customer such as an aircraft operator can receive a selection mask for different modular services in response to a maintenance service request from the maintenance platform server 2. In the example shown in Fig. 4 different modular services A, B, C are displayed to a user of the aircraft operator for selection from different modular service suppliers. In the given example the customer can select from three different suppliers for the modular service A, i.e. suppliers A1, A2, A3. The selection can be performed as shown in Fig. 4 manually by an operator.

In another embodiment the selection of the modular service such as the modular service A is performed automatically on the basis of customer information data stored in a database accessable by the maintenance platform server 2. The selection of the service modules to create a customized service package for the customer is normally not performed ad hoc when a service is needed but beforehand as a preconfiguration of maintenance services matching an individual workflow of the respective customer. The selected service modules can be orchestrated to an integrated service module.

A selection of a modular maintenance service can be performed in a possible embodiment depending on a current position or location of the aircraft 8 to be maintained. For example if an aircraft 8 needing maintenance is destined to land at Munich Airport the maintenance platform server 2 can display different service suppliers providing the necessary maintenance service which are all located at Munich Airport. The customer such as the aircraft operator can then select the necessary maintenance service from different displayed service suppliers located at Munich Airport. Accordingly, the maintenance platform server 2 can perform in a possible embodiment a preselection on the basis of customer information data and aircraft information data stored in a database 3 accessable by the maintenance platform server 2.

In another embodiment the maintenance platform server 2 can perform a complete automatic selection of modular services depending on one or several target criteria set by the respective customer. For example, the customer can provide the maintenance platform server 2 with predetermined selection criteria such as quality, price and availability of the respective maintenance services offered by the different modular service suppliers. For example, the aircraft operator can determine as a selection basis to select the modular service supplier which offers the respective maintenance service at the lowest costs or with the highest maintenance quality. In a possible embodiment the maintenance platform server 2 evaluates the quality feedback data from different customers and calculates a maintenance quality ranking of the different service suppliers of the respective modular maintenance service. Depending on the selection criteria given by the customer the maintenance platform server 2 can select automatically the maintenance service supplier which has the best ranking for the modular service according to the quality feedback data stored in its database. In a possible embodiment the maintenance platform server 2 first proposes the selected service supplier to the customer for confirmation.

In a further embodiment the maintenance platform server 2 first checks whether the customer such as the aircraft operator offers the needed maintenance services himself. Only if the customer does not offer the maintenance service himself the maintenance platform server 2 performs the necessary selection process between other service suppliers of the respective maintenance service.

In a possible embodiment the maintenance platform server 2 as shown in Fig. 3 is connected via the Internet 4 to a plurality of different customers and service suppliers located at different airports all over the world. Accordingly the customer terminals 5-i as shown in Fig. 3 can be located at different airports in different countries or continents.

In a possible embodiment the maintenance platform server 2 can calculate an optimal travelling route for an aircraft 8 needing maintenance to the respective modular service supplier. For example if a component of the aircraft 8 needs maintenance available by a maintenance service supplier selected by the maintenance platform server 2 according to predetermined selection criteria the maintenance platform server 2 can calculate a travelling route to the respective selected maintenance service supplier via one or several airports.

In a possible embodiment if the maintenance requirement is urgent the maintenance platform server 2 can send a control signal via the wireless link to the aircraft 8 to change its travelling route and can give an indication of the coordinates of the respective airport where the corresponding maintenance service is offered. In less urgent maintenance cases the maintenance platform server 2 can notify the aircraft operator to change the intended flight schedule of the aircraft 8 allowing maintenance of the aircraft at the selected maintenance service supplier. The maintenance platform server 2 can in a possible embodiment calculate an optimised travelling and maintenance schedule for the aircraft 8 of the aircraft operator.

In a possible embodiment the maintenance platform server 2 is an open IT platform which is based on a service-oriented architecture (SOA). This can comprise basic maintenance services to the suppliers such as access to fleet information data basis, communication services and access to technical documentation. Furthermore standardized plug and play ports for supplier's service modules can be provided with the capability for interaction between the service modules. Furthermore, an integrated access to customized and cooperative maintenance services with a guarantee of quality of service can be provided. This maintenance service can comprise also information and decision support services, such as diagnostic and prognostics, predictive maintenance planning or maintenance execution services such as line, base or shop maintenance. The customers have the advantage of an integrated and flexible offer for fleet maintenance services. The customers have a single interface such as common share services, consistant HMI and are able to choose the respective service provider to build its customized maintenance service package. The service suppliers can increase the value of their maintenance services or products by benefitting from the common shared services and through the ability to interact with other service suppliers. In the system according to the present invention the service suppliers can have a direct contact to the respective customers and also receive feedback data.

The aircraft 8 to be maintained by the platform or system according to the present invention can be any kind of aircraft such as aeroplanes or helicopters for civil or military purposes. An airport can also be formed by a mobile airport such as an aircraft carrier ship.

Other embodiments of the platform according to the present invention include registration and verification procedures for costumers and suppliers as well as evaluation of historic maintenance data of former maintenance services provided by the platform over the complete life cycle of an aircraft. The aircraft fleet of the customer can comprise aeroplanes from different manufactures such as Airbus or Boing.

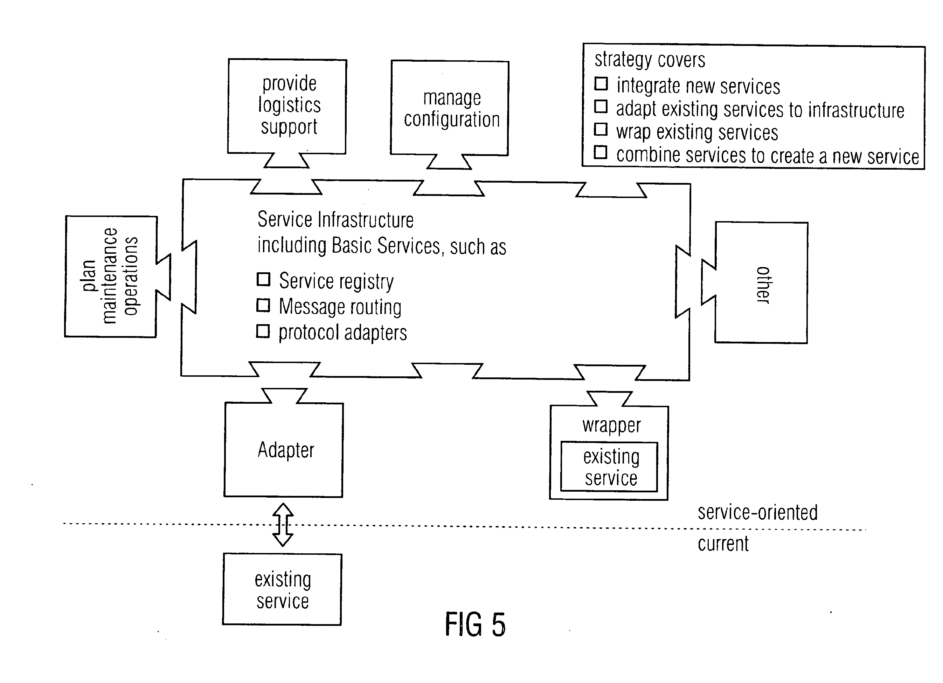

Figure 5 shows a diagram for illustrating the integration of different modular services or service modules in the maintenance platform 1 according to the present invention.

Different kinds of services can be integrated in the platform 1 according to the present invention, in particular already existing services and new services. In a possible embodiment an existing maintenance service or maintenance service module can be connected to the service infrastructure of the maintenance platform 1 via an adapter having a platform interface to the platform and a module interface to the already existing service software module. The platform interface is a standard common interface which can comprise plug and play ports. In a possible embodiment the platform interface is a SOAP interface.

A further possibility to integrate an existing maintenance service is to use a wrapper as shown in figure 5. The wrapper is embedding the already existing service software module and has a platform interface for connection to the service infrastructure of the service platform 1. Accordingly the end-to-end and maintained platform 1 according to the present invention allows integration of already existing maintenance services by the use of adapters and wrappers. Besides the already existing maintenance services the end-to-end maintenance platform 1 can also integrate specially designed maintenance services generated for example by a software tool or a software kit provided by the maintenance platform operator to service suppliers. The service suppliers can use the provided software development kit to generate the maintenance services which can be integrated into the service infrastructure of the end-to-end maintenance platform 1. In the example shown in Figure 5 such developed maintenance services can be a service to plan maintenance operations, a service to provide logistics support and a service to manage a configuration. Accordingly each service supplier can participate in the end-to-end maintenance platform 1 according to the present invention by programming a service module for his services using a software development tool provided by the maintenance platform operator. Also aircraft operators as customers can generate modules which can be used by the end-to-end maintenance platform 1 according to the present invention. For example an aircraft operator can generate a service module which collects status information of the aircraft 8 which supplies the platform 1 with useful information data about the status of the aircraft 8 such as fuel filling level in the aircraft fuel tank or transported cargo. For example if the aircraft operator or customer transports cargo in an airplane he can programme a software module generating cargo data for example by using RFID tags attached to the transported cargo. A service supplier providing logistic support for this customer can read the generated cargo data to unload the aircraft 8 at the destination airport efficiently. Accordingly the service modules can be generated by a corresponding tool not only by the maintenance platform operator but also by service customers as well as by service suppliers.

The system and platform 1 according to the present invention provides the ability to collect in real-time performance data and implement knowledge management strategies ensuring that the required performance data is available to relevant functions for review and action. This includes a matching forecast in service operability with schedule maintenance activities and the subsequent impact on the availability. The ability to collect real-time performance data includes manual data input, assessment input, service feedback information data and other automated data feeds. The platform server 2 performs a processing of the data by transcribing some form of data into another form, usually associated with a computer programme. The forms of data that might be transcribed include handwritten documents, information of spread sheets from another computer programme, sequences of numbers, letters and symbols that build a programme or simple data like names or addresses.

In a preferred embodiment the service infrastructure of the platform server 2 comprises a service registry of the service names of the different provided maintenance services. Accordingly the end-to-end maintenance platform 1 according to the present invention provides a data collection management function.

In a possible embodiment the end-to-end maintenance platform 1 further comprises a fleet management function.

An integrated contract management includes negotiating contract terms and conditions to ensure compliance with contract terms and conditions as well as documenting contract changes that arise during implementation or execution.

In a possible embodiment the declaration date of components within an aircraft provides an ability to predict the likelihood of a failure.

In a possible embodiment the end-to-end maintenance platform 1 according to the present invention performs a proactive maintenance which improves equipment reliability and maximizes effectiveness of available men power and resources. The integrated end-to-end maintenance platform 1 according to the present invention can perform a maintenance planning and scheduling including preparation times, testability requirements, support equipment needs, man power skills, repair responsibility etc. Furthermore, the integrated end-to-end maintenance platform 1 allows the provision of the maintenance execution services including inspection and remote and replace operation for a failed equipment of the aircraft 8. Maintenance execution services include the removal, repair as well as replacement of subassemblies or aircraft parts. The maintenance activity can range from repair, modification or overhaul of subassemblies and of critical components such as aircraft engines. The integrated end-to-end maintenance platform 1 can also provide technical expertise to assist operators and maintainers. This technical expertise can include written instructions, e-support services and remote maintenance and even integrated engineering technical manuals.

In a possible embodiment the integrated end-to-end maintenance platform 1 according to the present invention also comprises quality management services for ensuring that all the activities necessary to design, develop and implement a product and service are effective and efficient with respect to the system and its performance. The quality management can comprise three main components, e.g. quality control, quality assurance and quality improvement. The end-to-end maintenance platform 1 according to the present invention can also comprise repair and overhaul procedures, in particular the planning, development, distribution, training and management of the system repair and overhaul procedures.

Besides an integrated maintenance management the platform 1 according to the person can also provide a technical management comprising the identification, acquisition, storage, availability and maintainance of the support, repair, test and diagnostic equipment required to support the aircraft throughout its lifecycle. Furthermore, the technical management can comprise a configuration management, i. e. the distribution and tracking of current configuration of products and systems deployed. The technical management provided by the platform 1 according to the present invention can also comprise a logistic engineering to facilitate a knowledge based decision making through a product lifecycle.

By a possible embodiment administrative controls can be built into the maintenance programme to make sure that the result is achieved in compliance with a policy or work instructions of customers or service suppliers. A service provided by the integrated end-to-end maintenance platform 1 according to the present invention can also include the production and distribution and update or upgrade of technical manuals and product specifications.

In a further embodiment the integrated end-to-end maintenance platform 1 according to the present invention comprises a supply chain management function. In an embodiment this includes a material management to coordinate and control materials for maintenance work activities. Further a forecast of demand and resources required to supply replacement or repair components can be calculated. The supply chain management provided by the platform 1 according to the present invention comprises in a further embodiment a distribution and transportation management comprising a transportation modelling for handling of order execution and monitoring which allows asset visibility across the supply chain. Furthermore the supply chain management can include an inventory management providing the ability to efficiently store the appropriate inventory to meet the customers needs within the delivery performance agreement. Further the supply chain management of the platform 1 according to the present invention comprises in a possible embodiment a purchasing/vendor management and reverse logistics. Reverse logistics is the process of planning, implementing and controlling an efficient, cost effective flow of raw material, in-process inventory, finished goods and related information from the point of conception to the point of origin.

In a further embodiment the integrated end-to-end platform 1 according to the present invention comprises an organisational change management. This can encompass processes, procedures, training devices and equipment used to train personal to operate and support a system or aircraft component. Furthermore, a resource management can be provided including inventory, human skills, production resources or information technology. Furthermore, a communication and change management function can be provided allowing to asses the impact to the customer, service provider as well as support partner organisations.

In a possible embodiment of the end-to-end maintenance platform 1 according to the present invention the aircraft 8 to be maintained is equipped with additional sensors to provide data processed by different maintenance service modules connected to the service infrastructure platform via a standard interface such as an SOAP interface. In a possible embodiment these sensors can use magnetic fields to induce power and perform condition based health monitoring. In a possible embodiment the sensors can be exited by a probing external magnetic field and the sensor respond with its own magnetic field that varies its waveform properties depending on the specific parameter to be measured. The resultant waveform properties produce the necessary system data. The use of this kind of sensors in an aircraft 8 eliminates the shortcomings of conventional sensors such as weight, wiring degradation over time and unnecessary sensor power consumption when measurements are not being taken. Furthermore these kinds of sensors are suited in areas where electronic connections are hazardous or impractical, for example within fuel tanks or on remote pipelines of the aircraft 8.

In the embodiment shown in figure 1 the integrated end-to-end maintenance platform 1 comprises a platform server 2. In an alternative embodiment the end-to-end maintenance platform 1 according to the present invention can comprise several distributed platform servers. In a possible embodiment the platform 1 according to the present invention comprises a service oriented architecture SOA which can be implemented by web-services. These Web-Services can provide maintenance functions accessible over a communication protocol wherein these web-services can comprise either application or wrappers around existing services. A maintenance service provider can create a web-service and possibly publish its interface and access information to a service registry used by the maintenance platform 1 according to the present invention. A universal description discovery and integration (UDDI)-specification can be used to discover information about the respective web-service. The service requester or customer can locate entries in the registry by inputting a query. In a possible embodiment a SOAP (simple object access protocol) is used for exchanging structured information data with implemented web-services.

In a possible embodiment the integrated end-to-end maintenance platform 1 according to the present invention provides maintenance service modules for generating current position data of the respective aircraft 8 to be maintained and other service modules evaluating the current position data of the aircraft 8. For example a first maintenance service module provided for example by the customer, i. e. aircraft operator of the aircraft processes GPS data from a GPS unit of said aircraft 8 and provides the service infrastructure of the platform 1 with the current position or coordinates of the aircraft 8 to be maintained. Another service module, for example of a maintenance repair and overhaul organisation MRO, can evaluate the provided coordinates and position data of the aircraft 8 to match it for example with its mobile work force. In this example a customer or aircraft operator can programme a first service module for generating aircraft position data and a service supplier programmes another service module which consumes or processes the provided position data of the aircraft 8.

In a possible embodiment several provided service modules are orchestrated or integrated into an integrated service module with a separate name stored in the service registry of the maintenance platform provider. The orchestration of different service modules can be triggered by a customer or a service supplier. In a possible embodiment a service supplier can integrate or orchestrate different service modules provided by himself or by other service suppliers into an integrated service modules connected to the service infrastructure by means of the common standardised platform and interface.

In a possible embodiment a customer such as an aircraft operator can provide his workflow for the requested maintenance service. On the basis of the transmitted workflow a service provider can generate a corresponding fitting maintenance service connected to the service infrastructure via the platform interface. In a possible embodiment the service infrastructure of the maintenance platform 1 according to the present invention can comprise a data base for storing maintenance workflows of different customers. A service supplier can load a maintenance workflow of the customer and create a corresponding maintenance service module.

In a possible embodiment the provided maintenance services are real-time services providing maintenance services in real-time after receiving a request for the selected service from the maintenance platform server 2. Other maintenance services are provided not in real-time but according to a predetermined maintenance schedule.

As becomes evident from the above description of the integrated end-to-end and maintenance platform 1 according to the present invention the platform can comprise a huge number of maintenance services from different maintenance service suppliers adapted to the needs of the respective customers.

The platform 1 for aircraft maintenance and asset management according to the present invention provides many advantages for the customers as well as the service suppliers. A pilot of an aircraft operator forming a customer or client to the maintenance platform can get a clear indication of the aircraft operation status for the next mission. The pilot can support simple maintenance actions because he is linked to the system via a terminal in the aircraft cockpit. An OCC of the operator can have a real time view on a current or predicted operational status of the aircraft fleet. Flight operators have the advantage that the aircraft fleet has an increased availability and operational reliability. Furthermore, the average aircraft life time is increased.

A maintenance and engineering organisation can also have a real time view on the technical and operational status of the aircraft fleet. Its ability to perform the maintenance service is increased because the maintenance service supplier can read aircraft status data and can act accordingly. The maintenance service supplier can have an access to the aircraft configuration of the aircraft to be maintained. A maintenance platform 1 can further provide an engineering support information system for fleet data analysis of a current or predicted fleet condition. Furthermore, the logistics can be optimised for example by condition based planning.

Besides the aircraft operator and the maintenance service supplier also the manufacturers, in particular the aircraft manufacturers have advantages from the platform 1 according to the present invention. The manufacturers of aircraft components have access to service data to gain knowledge for upgrading their component design.

In a possible embodiment the maintenance service provided by the platform 1 according to the present invention are reactive, e.g. in response to specific customer demand. In an alternative embodiment some maintenance services are proactive, e.g. a demand for a maintenance service is automatically detected and the corresponding maintenance service is triggered by this detection.

Most maintenance services are performed when the aircraft 8 is on ground. In possible embodiments some maintenance services are performed when the aircraft 8 is airborne. For example an update or upload of a software component can be performed for non-safety critical aircraft component during flight. In a possible embodiment the aircraft maintenance platform 1 according to the present invention allows a remote maintenance action from a remote terminal for example for software components.

## Claims

1. An integrated end-to-end maintenance platform (1) for maintenance of at least one aircraft (8) comprising a customer interface for selecting a customized service package including modular services of different aircraft maintenance service suppliers by means of a customer terminal (5) of a customer having access to said maintenance platform (1) via a communication network (4).

2. The integrated end-to-end maintenance platform according to claim 1,
wherein the maintenance platform (1) is implemented on at least one maintenance platform server (2) connected to said communication network (4).

3. The integrated end-to-end maintenance platform according to claim 2,
wherein said maintenance platform server (2) is connected to at least one database (3) storing modular services provided by service suppliers, wherein said modular services are selected in response to a service query of a customer or in response to a detected condition of said aircraft (8).

4. The integrated end-to-end maintenance platform (1) according to claims 1 to 3,
wherein said modular services comprise at least:
- maintenance information services, in particular providing access to aircraft fleet information databases and to technical documentation databases of said service suppliers;
- information and decision support services, in particular diagnostic services, prognostic services and predictive maintenance planning services;
- aircraft maintenance execution services;
- remote maintenance services and
- aircraft configuration and/or status information services.

5. The integrated end-to-end maintenance platform according to claims 1 to 4,
wherein said maintenance platform server (2) performs a consistency check of the selected modular services.

6. The integrated end-to-end maintenance platform according to claims 1 to 5,
wherein a quality of the provided services is monitored by the platform server (2) on the basis of feedback from the customer terminals (5) received via said communication network (4).

7. The integrated end-to-end maintenance platform according to claims 1 to 6,
wherein said customer comprises:
- an aircraft operator,
- a maintenance, repair and overhaul organisation (MRO) or
- an aircraft lessor.

8. The integrated end-to-end maintenance platform according to claims 1 to 7,
wherein said service supplier comprises:
- an original equipment manufactures (OEM),
- a maintenance, repair and overhaul organization (MRO), and
- an Information System (IS) supplier.

9. The integrated end-to-end maintenance platform according to claims 1 to 8,
wherein the maintenance platform (1) comprises a platform interface for each interactive service supplier module.

10. The integrated end-to-end maintenance platform according to claims 1 to 9,
wherein said platform interface is formed by a SOAP (Simple Object Access Protocol) interface, by an AMQP (Advanced Message Queuing Protocol) interface, by a CORBA interface, by a JEE-interface, an JMS interface or a .NET interface.

11. The integrated end-to-end and maintenance (1) according to claims 1 to 4,
wherein each service module is integrated in that maintenance platform (1) either directly via a corresponding platform interface of said service module or
via an adapter having a platform interface and a module interface to that service module or
via a wrapper having a platform interface and embedding said service module.

12. The integrated end-to-end maintenance platform (1) according to claims 1 to 11,
wherein each service module comprises a service name registered in database of said maintenance platform (1).

13. The integrated end-to-end maintenance platform according to claims 1 to 12,
wherein said customer terminal (5) is provided within said aircraft (8) and is connected to said communication network (4) via a wired or wireless link or wherein said customer terminal (5) is a mobile device connected to said communication network (4) via a wireless link.

14. The integrated end-to-end maintenance platform (1) according to claims 1 to 13,
wherein said maintenance platform server (2) is connected by means of a wired or wireless link to a data monitoring and recording system (7) of said aircraft (8).

15. The integrated end-to-end maintenance platform (1) according to claim 14,
wherein said data monitoring and recording system (7) of said aircraft (8) provides flight parameter data, usage data, and configuration data of said aircraft (8) to said maintenance platform server (2).

16. The integrated end-to-end maintenance platform (1) according to claim 15,
wherein maintenance messages are provided by said monitoring and recording system (7) of said aircraft (8) in real time to said maintenance platform server (2).

17. A method for providing maintenance services to a customer operating an aircraft (8) comprising a selection of a customized service package including modular services of different maintenance service suppliers.

18. The method according to claim 17, wherein the selection is performed on the basis of selection criteria set by said customer.

19. The method according to claim 17 or 18, wherein the selection is performed on the basis of feedback data received from a plurality of customers.

20. A computer program comprising instructions for executing the method of claims 17 to 19.

21. A data carrier which stores the computer programme of claim 20.

22. A tool for developing modular aircraft maintenance services for an integrated end-to-end maintenance platform (1) wherein each aircraft maintenance service module is integrated in said platform (1) via a platform interface of said aircraft maintenance service module or via an adapter having a platform interface and a module interface to said aircraft maintenance service module or via a wrapper having a platform interface and embedding said service module.

23. The tool according to claim 22,
wherein said platform interface comprises a SOAP interface, an AMQP-interface, a CORBA interface, an JEE-interface, a JMS-interface or a .NET interface.

## Amended claims

### Amended claims in accordance with Rule 137(2) EPC.

**1.** An integrated end-to-end maintenance platform (1) for maintenance of at least one aircraft (8) comprising a customer interface for selecting a customized service package including modular services of different aircraft maintenance service suppliers by means of a customer terminal (5) of a customer having access to said maintenance platform (1) via a communication network (4),
wherein said customer comprises an aircraft operator, wherein the maintenance platform (1) is implemented on at least one maintenance platform server (2) connected to said communication network (4),
wherein said maintenance platform server (2) is connected by means of a wireless link to a data monitoring and recording system (7) of said aircraft (8),
wherein said data monitoring and recording system (7) of said aircraft (8) provides flight parameter data, usage data, and configuration data of said aircraft (8) to said maintenance platform server (2),
wherein maintenance messages are provided by said monitoring and recording system (7) of said aircraft (8) in real time to said maintenance platform server (2), wherein the maintenance message received from the aircraft (8) is forwarded by the maintenance platform server (2) to the operator of the respective aircraft,
wherein the aircraft operator sends a maintenance request via the communication network (4) to the maintenance platform server (2) for selecting the customized service package.

**2.** The integrated end-to-end maintenance platform according to claim 1,
wherein said maintenance platform server (2) is connected to at least one database (3) storing modular services provided by service suppliers, wherein said modular services are selected in response to a service query of a customer or in response to a detected condition of said aircraft (8).

**3.** The integrated end-to-end maintenance platform (1) according to claims 1 or 2,
wherein said modular services comprise at least:
- maintenance information services, in particular providing access to aircraft fleet information databases and to technical documentation databases of said service suppliers;
- information and decision support services, in particular diagnostic services, prognostic services and predictive maintenance planning services;
- aircraft maintenance execution services;
- remote maintenance services and
- aircraft configuration and/or status information services.

**4.** The integrated end-to-end maintenance platform according to claims 1 to 3,
wherein said maintenance platform server (2) performs a consistency check of the selected modular services.

**5.** The integrated end-to-end maintenance platform according to claims 1 to 4,
wherein a quality of the provided services is monitored by the platform server (2) on the basis of feedback from the customer terminals (5) received via said communication network (4).

**6.** The integrated end-to-end maintenance platform according to claims 1 to 5,
wherein said service supplier comprises:
- an original equipment manufactures (OEM),
- a maintenance, repair and overhaul organization (MRO), and
- an Information System (IS) supplier.

**7.** The integrated end-to-end maintenance platform according to claims 1 to 6,
wherein the maintenance platform (1) comprises a platform interface for each interactive service supplier module.

**8.** The integrated end-to-end maintenance platform according to claims 1 to 7,
wherein said platform interface is formed by a SOAP (Simple Object Access Protocol) interface, by an AMQP (Advanced Message Queuing Protocol) interface, by a CORBA interface, by a JEE-interface, an JMS interface or a .NET interface.

**9.** The integrated end-to-end and maintenance (1) according to claims 1 to 3,
wherein each service module is integrated in that maintenance platform (1) either directly via a corresponding platform interface of said service module or
via an adapter having a platform interface and a module interface to that service module or
via a wrapper having a platform interface and embedding said service module.

**10.** The integrated end-to-end maintenance platform (1) according to claims 1 to 9,
wherein each service module comprises a service name registered in database of said maintenance platform (1).

**11.** The integrated end-to-end maintenance platform according to claims 1 to 10,
wherein said customer terminal (5) is provided within said aircraft (8) and is connected to said communication network (4) via a wired or wireless link or wherein said customer terminal (5) is a mobile device connected to said communication network (4) via a wireless link.
